(19) Europäisches Patentamt
European Patent Office
Office européen des brevets

(11) **EP 1 029 091 B1**

(12) **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.[7]: **C22B 1/10**, C22B 5/14, F27B 15/00, C21D 1/53, B01J 8/24, B22F 1/00, C09K 3/14, C04B 7/45

(21) Anmeldenummer: **98961115.7**

(22) Anmeldetag: **31.10.1998**

(86) Internationale Anmeldenummer:
**PCT/EP98/06903**

(87) Internationale Veröffentlichungsnummer:
**WO 99/25884 (27.05.1999 Gazette 1999/21)**

(54) **VERFAHREN UND AGGREGAT ZUR THERMISCHEN BEHANDLUNG VON FEINKÖRNIGEN STOFFEN IN EINER GROBKORNBETTWIRBELSCHICHT**

METHOD AND UNIT FOR HEAT-TREATING FINE-GRAINED MATERIALS IN A COARSE-GRAINED FLUIDIZED BED

PROCEDE ET UNITE POUR LE TRAITEMENT THERMIQUE DE MATIERES A GRAINS FINS DANS UN LIT FLUIDISE A GROS GRAINS

(84) Benannte Vertragsstaaten:
**AT DE FR GB IT**

(30) Priorität: **14.11.1997 DE 19750475**

(43) Veröffentlichungstag der Anmeldung:
**23.08.2000 Patentblatt 2000/34**

(73) Patentinhaber: **Treibacher Schleifmittel AG
A-9523 Villach-Landskron (AT)**

(72) Erfinder:
• **ZEIRINGER, Hans
A-9321 Kappel (AT)**
• **MAIWALD, Rolf
D-09599 Freiberg (DE)**

(74) Vertreter: **Neunert, Peter Andreas
Westphal - Mussgnug & Partner
Patentanwälte
Waldstrasse 33
78048 Villingen-Schwenningen (DE)**

(56) Entgegenhaltungen:
EP-A- 0 534 243          WO-A-96/10094
DE-A- 2 356 058          DE-A- 3 540 206
GB-A- 781 994            GB-A- 2 247 307

• **PATENT ABSTRACTS OF JAPAN vol. 016, no. 553 (M-1339), 24. November 1992 & JP 04 210411 A (NIPPON STEEL CORP), 31. Juli 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren nach dem Oberbegriff des Anspruchs 1 sowie ein Aggregat zur Durchführung desselben.

In der chemischen und metallurgischen Verfahrenstechnik besteht fallweise die Notwendigkeit, feinkörnige Feststoffe einer thermischen Behandlung zu unterziehen. Dabei kann es zur Erweichung des Stoffes bzw. einzelner Phasen desselben kommen. Die Bildung von Agglomeraten und Anlagerungen an den Wänden des Aggregates, das zur thermischen Behandlung verwendet wird, ist unerwünscht und kann die Produktqualität negativ beeinflussen und/oder den Prozeßablauf beeinträchtigen. Die Agglomerate müssen nachträglich mit hohem technischen Aufwand zerkleinert und das Produkt muß nachklassiert werden.

Für die Behandlung feinkörniger Feststoffe naheliegend sind Suspensionsverfahren, bei denen die feinkörnigen Feststoffe in einem gasförmigen Medium suspendiert werden. Derartige Gas-Feststoffsysteme sind beispielsweise als stationäre und als Zirkulationswirbelschicht bekannt. (Wirbelschichtprozesse für die Chemie- und Hüttenindustrie, die Energieumwandlung und den Umweltschutz, Chem.-Ing.-Technik 55, 1983, Nr.2, S 87-93 ). Erstere arbeiten bei Strömungsgeschwindigkeiten unterhalb, letztere oberhalb der dem Feststoff zuzuordnenden pneumatischen Austragsgeschwindigkeit, wobei im Gegensatz zum Stromreaktor, der mit geringen Feststoffdichten arbeitet, für beide Systeme hohe Feststoffdichten charakteristisch sind. Wird bei Temperaturen im oder über dem Erweichungsbereich der Feststoffteilchen oder einzelner Phasen derselben gearbeitet, agglomerieren diese auch in der Wirbelschicht und sintern an den Reaktorwänden an.

In der DE-OS 3 540 206 wird ein Hochtemperatur-Suspensionsverfahren zur Kalzination und zum Brennen von Aluminiumhydroxid bei 1400° C beschrieben, das eine Zirkulationswirbelschicht zur Aufheizung und Kalzination des Feststoffes und einen Stromreaktor zum Brennen des $Al_2O_3$ bei 1400° C verwendet. Die Agglomeration der Feststoffteilchen wird dadurch vermieden, daß das vorgewärmte Aluminiumhydroxid direkt in die Brennerflamme des Stromreaktors eingeführt und dabei auf 1400° C erhitzt wird. Beim Transport durch den Stromreaktor erfolgt die vollständige Kalzination. Um Agglomerationen zu verhindern, wird außerdem in der Reaktionszone des Stromreaktors mit geringer Feststoffdichte gearbeitet und im oberen Teil des Stromreaktors mit Luft gekühlt. Ansinterungen an der Ofenwand sollen durch hohe Relativgeschwindigkeiten der Feststoffteilchen, bezogen auf die Ofenwand, vermieden werden.

Der Nachteil des Verfahrens liegt in dem hohen technischen Aufwand für das Aufheizen und die Kalzination des Feststoffes in einer Zirkulationswirbelschicht und die Durchführung der Hochtemperaturreaktion im nachgeschalteten Stromreaktor, der je nach geforderter Verweilzeit Bauhöhen von 10 bis 20 m haben kann. Trotz geringer Feststoffdichte sind Ansätze an den Reaktorwänden durch Wirbelbildungen und Rückströme nicht zu vermeiden.

Aus den Patent Abstracts of Japan, vol. 16, no. 553 (M-1339), 24.11.92 ist ein Fließbettreaktor bekannt, bei dem Grobkorn mit einer Korngröße von 0, 1 bis 0,5 mm zur Ausbildung einer Wirbelschicht verwendet wird. In diese Wirbelschicht wird Feinstaub eingeblasen, der ohne Agglomerationserscheinungen reduziert wird.

Ausgehend von den Mängeln bekannter Lösungen liegt der vorliegenden Erfindung die Aufgabe zu Grunde, ein Verfahren und ein Aggregat zur thermischen Behandlung von bei erhöhter Temperatur zur Agglomeration und/oder Ansinterung an die Reaktorwand neigenden feinkörnigen Stoffen mit einer Korngröße von etwa 0 bis 1000 μm bereitzustellen, die eine thermische Behandlung im Temperaturbereich ihrer Erweichung und Sinterung gestatten, dabei eine Agglomeration der Teilchen weitgehend ausschließt und ein Ansintern der Teilchen an den Wänden des Aggregats verhindern.

Erfindungsgemäß wird diese Aufgabe durch die Merkmale der Ansprüche 1 bzw. 7 gelöst.

Die Unteransprüche sind auf vorteilhafte Weiterbildungen der Erfindung gerichtet.

Das Grobkorn besteht aus artgleichen, artverwandten und/oder artfremden Stoffen der Korngröße 1 bis 10 mm. Die Stoß- und Scheuerwirkung des die Fremdbettwirbelschicht bildenden Grobkorns einerseits und die Temperaturdifferenz zwischen Erweichungsund Sintertemperatur des Grob- und Feinkorns andererseits verhindern die Agglomeration der Feinkornteilchen untereinander, das Aufsintern auf die Grobkornteilchen der Fremdbettwirbelschicht und das Ansintern an den Reaktorwänden.

Wesentlich für die Erfindung ist, daß die Wirbelschicht in einem in sich geschlossenen konischen Ofenraum bei vollständiger Füllung desselben ausgebildet wird, das Feinkorn unmittelbar über dem Düsenrost in diese eingetragen wird und diese dadurch eine zirkulierende, die Verweilzeit erhöhende Bewegung ausführt. Dabei erfolgt in der gegebenen Ofenatmosphäre die gewünschte chemische oder physikalische Reaktion im Feinkorn.

Das Aggregat besteht aus einem zweistufigen Apparat, dessen untere Stufe ein Wirbelschichtsegment darstellt, in dem eine Wirbelschicht erzeugt wird, und dessen obere Stufe - das Oberofensegment - als doppelwandiger Kühler ausgebildet ist und erfindungsgemäß Innenwandtemperaturen aufweist, die mindestens 10° C bis 200° C, vorzugsweise 100° C, unter der Erweichungs-bzw. Agglomerationstemperatur des Feinkorns liegen, wodurch Ansatzbildungen an dessen Wänden verhindert werden. Das Wirbelschichtsegment ist keramisch ausgekleidet, wobei die Seitenwände und die Deckenwand mit Kühlmänteln ausgerüstet sind. Das Oberofensegment ist als doppelwandiger Kühler ausgebildet, bei dem die Verbrennungsluft als Kühlmittel fungiert. Das Oberofensegment ist in seinem Unterteil konisch, in seinem Oberteil zylindrisch ausgebildet. Dadurch entstehen zirkulierende Bewegungen des Feinkorns, die seine Kühlung intensivieren.

Erfindungsgemäß wird das Feinkorn durch eine zentral angeordnete, als Diffusorhals bezeichnete Öffnung in das als Kühler ausgebildete doppelwandige Oberofensegment pneumatisch ausgetragen und dort unter seine Agglomerationstemperatur abgekühlt. Damit wird eine nachträgliche Agglomeration und Ansinterung an die Wände des Oberofensegmentes verhindert.

Der Größenunterschied zwischen dem Grobkorn der Fremdbettwirbelschicht und dem Feinkorn muß so gewählt werden, daß der pneumatische Austrag des Grobkorns in das Oberofensegment und damit dessen unerwünschte Kühlung weitgehend verhindert ist. Erfindungswesentlich ist, daß der Diffusorhals ein Öffnungsverhältnis von

$$\ddot{O} = \frac{\text{Fläche Wirbelschicht}}{\text{Fläche Diffusorhals}} = 6 \text{ bis } 9$$

und ein Längenverhältnis von

$$L = \frac{\text{Länge Diffusorhals}}{\text{Durchmesser Diffusorhals}} = 0{,}5 \text{ bis } 1$$

besitzt, damit die Rückführung von Grobkorn der Fremdbettwirbelschicht aus dem Oberofen in die Wirbelschicht ermöglicht und eine unerwünschte Rückführung des Feinkorns in die Wirbelschicht weitgehend eingeschränkt wird.

Die Erfindung soll nachstehend an Hand eines Ausführungsbeispieles näher beschrieben werden, das sich auf die thermische Behandlung von Schleifkorn auf Basis von mit Titanoxid legiertem Korund bezieht.

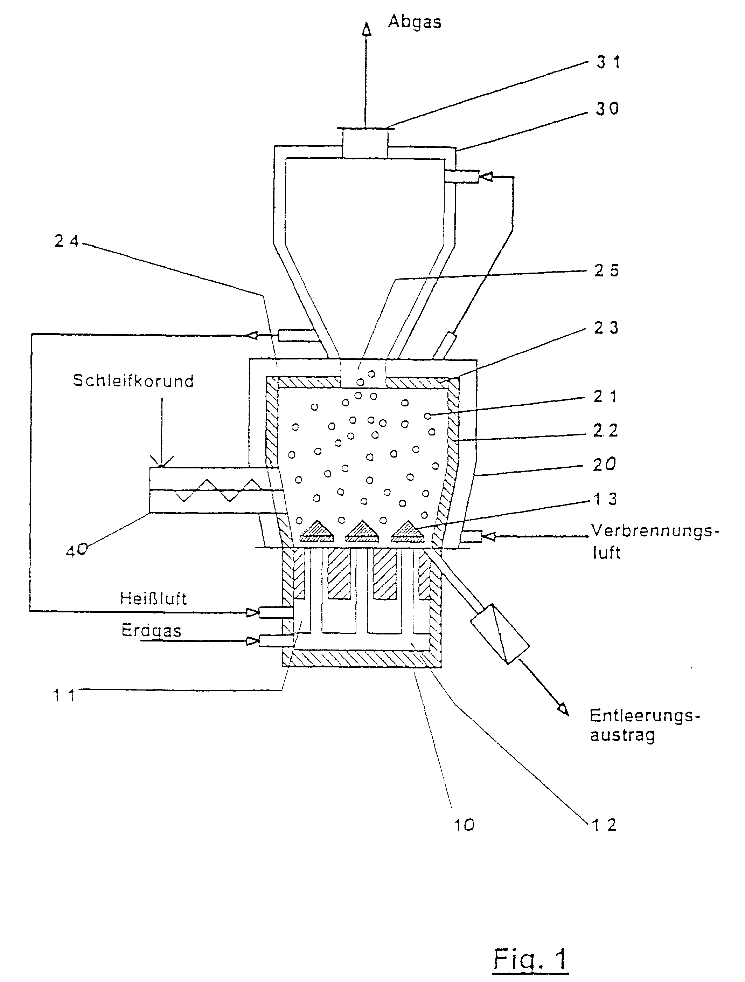

FIG. 1 zeigt einen schematischen Vertikalschnitt durch einen zur Durchführung des erfindungsgemäßen Verfahrens geeigneten Wirbelschichtofen, der einen Düsenboden 10, ein Wirbelschichtsegment 20, ein Oberofensegment 30 und eine Aufgabevorrichtung 40 aufweist.

Dem Düsenboden 10 werden über eine Luftkammer 11 und eine Gaskammer 12 Heißluft und Brenngas so zugeführt daß diese intensiv gemischt aus den Düsenköpfen 13 austreten und im Wirbelschichtsegment 20 verbrennen. Das dabei entstehende Rauchgas erzeugt eine aus grobkörnigen Schmelzkorundkörnern bestehende Wirbelschicht 21, die dabei auf Temperaturen bis > 1350° C aufgeheizt wird. Das Wirbelschichtsegment 20 besteht aus der keramischen Innenwand 22 und der Deckenwand 23, die von einem Kühlmantel 24 umgeben sind. Diesem wird kalte Verbrennungsluft als Kühlluft zugeführt. Dadurch reduziert sich die Temperatur der keramischen Innenwand 22 auf der Innenseite auf < 1000° C.

Mit Hilfe der Aufgabevorrichtung 40, die unmittelbar über dem Düsenboden 10 angeordnet ist, wird sinterempfindliches Korund-Feinkorn der Wirbelschicht 21 zugeführt, wobei sich dieses zwischen den grobkörnigen Schmelzkorundteilchen verteilt und auf beispielsweise 1350° C aufgeheizt wird. Dabei oxidiert ein Teil des im Korundkorn gelösten $Ti_2O_3$ zum $TiO_2$ und wird ausgeschieden. Die dadurch verursachte Lichtbrechung vermittelt die gewünschte Blaufärbung des Schleifkorns. Das aufgeheizte Schleifkorn wird in der Folge pneumatisch nach oben befördert. Der größere Anteil prallt auf die keramische Deckenwand 23 und wird in die Wirbelschicht 21 zurückgestoßen. Der kleinere Teil wandert durch einen Diffusorhals 25 in das Oberofensegment 30, wird dort unter seine Agglomerations- oder Sintertemperatur abgekühlt, durch das Abgasrohr 31 in das Abgassystem ausgetragen und schließlich im nachgeschalteten Zyklon und Gewebefilter abgeschieden. Der Diffusorhals 25 besitzt ein Öffnungsverhältnis

$$\ddot{O} = \frac{\text{Fläche Wirbelschicht}}{\text{Fläche Diffusorhals}} = 7$$

und ein Längenverhältnis von

$$L = \frac{\text{Länge Diffusorhals}}{\text{Durchmesser Diffusorhals}} = 0{,}7$$

Das Oberofensegment 30 ist als doppelwandiger Wärmeaustauscher ausgeführt. Es besteht aus einem konischen Unterteil mit einem Konuswinkel von 35° und einem zylindrischen Oberteil. Kühlmittel ist die Verbrennungsluft, die über den Kühlmantel 24 und das Oberofensegment 30 als Heißluft von 700 bis 800° C der Luftkammer 11 des Düsenbodens 10 zugeführt wird.

Beim erfindungsgemäßen Verfahren wird der feinkörnige Feststoff in eine grobkörnige Fremdbettwirbelschicht eingetragen, die in einem in sich geschlossenen Ofenraum bei vollständiger Füllung desselben zur Ausbildung kommt. Die Stoß- und Scheuerwirkung des Grobkorns verhindert das Zusammensintern des Feinkorns untereinander, das Aufsintern auf dem Grobkorn und das Ansintern an den Reaktorwänden.

Das Aggregat zur Durchführung des Verfahrens ist ein zweistufiger Apparat, dessen untere Stufe als Wirbelschichtsegment und dessen obere Stufe als doppelwandiger Kühler ausgebildet ist, wobei dessen Innenwandtemperatur mindestens 10° C bis 200° C, vorzugsweise 100° C, unter der Erweichungs- bzw. Agglomerationstemperatur des Feinkorns liegt. Dadurch werden Ansinterungen an den Reaktorwänden verhindert.

Das Verfahren ermöglicht beispielsweise das nahezu agglomerationsfreie Blauglühen von feingekörnten Schleifmitteln auf Basis von mit Titanoxid legiertem Korund bei Temperaturen bis 1350° C.

**Patentansprüche**

1. Verfahren zur thermischen Behandlung von bei einer erhöhten Temperatur zur Agglomeration neigenden feinkörnigen Stoffen mit einer durchschnittlichen Korngröße von etwa 0 bis 1000 μm in Temperaturbereichen an und über der Agglomerationstemperatur in einer grobkörnigen Fremdbettwirbelschicht (Grobkorn), wobei

   - der Temperaturbereich, in dem das Grobkorn zur Agglomeratbildung und Ansinterung an den Reaktorwänden aufgrund der Teilchengröße und Stoffzusammensetzung neigt, über dem des Feinkorns liegt,

   - als Grobkorn ein artgleiches, artverwandtes und/oder artfremdes Material der durchschnittlichen Korngröße 1 bis 10 mm zur Anwendung kommt,

   - die Wirbelschicht in einem in sich geschlossenen, konischen Ofenraum bei vollständiger Füllung desselben ausgebildet wird,

   - das Feinkorn unmittelbar über dem Boden der Wirbelschicht eingetragen wird, in der Wirbelschicht eine zirkulierende Bewegung ausführt und bei der thermischen Behandlung einer chemischen oder physikalischen Reaktion unterliegt,

   - das Feinkorn aus der, Wirbelschicht pneumatisch über einen Diffusorhals in ein Oberofensegment ausgetragen und dort sofort unter seine Erweichungs- oder Agglomerationstemperatur gekühlt wird, wobei der Diffusorhals ein Öffnungsverhältnis von

   $$Ö = \frac{\text{Fläche Wirbelschicht}}{\text{Fläche Diffusorhals}} = 6 \text{ bis } 9$$

   und ein Längenverhältnis von

   $$L = \frac{\text{Länge Diffusorhals}}{\text{Durchmesser Diffusorhals}} = 0{,}5 \text{ bis } 1$$

   besitzt.

2. Verfahren nach Anspruch 1, **dadurch gekennzeichnet, daß** die thermische Behandlung als Oxidationsprozeß durchgeführt wird.

3. Verfahren nach Anspruch 1, **dadurch gekennzeichnet, daß** die thermische Behandlung als Reduktionsprozeß durchgeführt wird.

4. Verfahren nach Anspruch 1, **dadurch gekennzeichnet, daß** die thermische Behandlung als physikalischer Prozeß durchgeführt wird.

5. Verfahren nach einem der Ansprüche 1 bis 4, **dadurch gekennzeichnet, daß** als feinkörniger Stoff ein Schleifmittel auf Basis von Korund verwendet wird.

6. Verfahren nach Anspruch 5, **dadurch gekennzeichnet, daß** der feinkörnige Stoff ein mit Titanoxid, Zirkonoxid, Chromoxid oder Kohlenstoff versetzter Korund ist.

7. Aggregat zur Durchführung des Verfahrens nach einem der Ansprüche 1 bis 6 in Form eines zweistufigen Apparates, mit einer unteren Stufe als Wirbelschichtsegment (20) in Form eines in sich geschlossenen, konischen Ofenraums, einer oberen Stufe als doppelwandiger Kühler (Oberofensegment) (30), einem zwischen der unteren Stufe und der oberen Stufe zentral angeordneten Diffusorhals (25), sowie Mitteln (40) zum Eintragen des Feinkorns in das Wirbelschichtsegment (20) unmittelbar über einem Düsenrost, wobei

   - in Betriel die Innenwandtemperatur im Wirbelschichtsegment (20) und im Oberofensegment (30) mindestens 10° C bis 200° C, vorzugsweise 100° C, unter der Erweichungs- bzw. Agglomerationstemperatur des Feinkorns liegt,

   - der Diffusorhals (25), ein Öffnungsverhältnis von

   $$Ö = \frac{\text{Fläche Wirbelschicht}}{\text{Fläche Diffusorhals}} = 6 \text{ bis } 9$$

   und ein Längenverhältnis von

   $$L = \frac{\text{Länge Diffusorhals}}{\text{Durchmesser Diffusorhals}} = 0{,}5 \text{ bis } 1$$

   besitzt, und

   - das Unterteil des Oberofensegmentes (30) konisch mit einem Konuswinkel von 30° bis 45° ausgebildet ist.

**Claims**

1. A process for the heat treatment of fine-grained materials which tend to agglomerate at high temperatures with an average grain size of approximately 0 to 1000 μm within temperature ranges at and above the agglomeration temperature in a fluidised bed of a different, coarse-grained material (coarse grain), whereby

- the temperature range in which the coarse-grained material tends to agglomerate and to sinter on the reactor walls by virtue of the particle size and material composition is higher than that of the fine-grained material,

- a material which is of the same type, a similar type and/or a different type with an average grain size of 1 to 10 mm is used as the coarse-grained material,

- the fluidized bed is constructed in a self-contained, conical furnace chamber, with the complete filling of said chamber,

- the fine grained material is charged directly over the bottom of the fluidised bed, performs a circulating movement in the fluidised bed and during the heat treatment is subjected to a chemical or physical reaction,

- the fine-grained material is pneumatically withdrawn from the fluidised bed via a diffusor neck into an upper furnace section and there is cooled immediately to beneath its softening or agglomeration temperature, with the the diffusor neck having an opening ratio of

$$O = \frac{\text{area of fluidised bed}}{\text{area of diffusor neck}} = 6 \text{ to } 9$$

and a length ratio of

$$L = \frac{\text{length of diffusor neck}}{\text{diameter of diffusor neck}} = 0.5 \text{ to } 1$$

2. A process according to Claim 1, **characterised in that** the heat treatment is performed as an oxidation process.

3. A process according to Claim 1, **characterised in that** the heat treatment is performed as a reduction process.

4. A process according to Claim 1, **characterised in that** the heat treatment is performed as a physical process.

5. A process according to one of Claims 1 to 4, **characterised in that** an abrasive on a corundum base is used as the fine-grained material.

6. A process according to Claim 5, **characterised in that** the fine-grained material is a corundum mixed with titanium oxide, zircon oxide, chromium oxide or carbon.

7. A unit for performing the process according to one of Claims 1 to 6 in the form of a two-stage apparatus, with a lower stage as a fluidised bed section (20) in the form of a self-contained, conical furnace chamber, an upper stage as a double-walled cooler (upper furnace section) (30), a diffusor neck (25) disposed centrally between the lower stage and the upper stage, and also means (40) for charging the fine-grained material into the fluidised bed section (20) directly above the tuyère grating, wherein

- in operation the inner wall temperature in the fluidised bed section (20) and in the upper furnace section (30) is at least 10°C to 200°C, preferably 100°C, beneath the softening or agglomeration temperature of the fine-grained material,

- the diffusor neck (25) has an opening ratio of

$$O = \frac{\text{area of fluidised bed}}{\text{area of diffusor neck}} = 6 \text{ to } 9$$

and a length ratio of

$$L = \frac{\text{length of diffusor neck}}{\text{diameter of diffusor neck}} = 0.5 \text{ to } 1$$

and

- the lower part of the upper furnace section (30) has a conical construction with a cone angle of 30° to 45°.

**Revendications**

1. Procédé de traitement thermique de substances à grains fins qui ont tendance à l'agglomération à une température accrue ayant une taille de grains moyenne d'environ 0 à 1 000 μm, dans une plage de températures à et au-dessus de la température d'agglomération dans un lit fluidisé de lit externe (grain grossier) dans lequel :

- la plage de température dans laquelle le grain grossier à tendance à la formation d'agglomérat et à la formation de frittes sur les parois du réacteur en raison de la taille des particules et de la composition de la substance se situe au-dessus de celle du grain fin,

- comme grain grossier on utilise un matériau de même type, d'un type apparenté et/ou d'un type étranger ayant une taille moyenne de grains de 1 à 10 mm,

- le lit fluidisé est conformé dans un espace de four conique, fermé en soi pour le remplissage complet de celui-ci,

- le grain fin est introduit immédiatement au-dessus du fond du lit fluidisé, effectue dans le lit fluidisé un mouvement circulant et est soumis au cours du traitement thermique à une réaction chimique ou physique,

- on évacue le grain fin du lit fluidisé pneumatiquement par l'intermédiaire d'un col de diffuseur dans un segment de four supérieur et là on le refroidit immédiatement en dessous de la température de ramollissement ou d'agglomération, le col de diffuseur ayant un rapport d'ouverture :

$$\text{Ö} = \frac{\text{Surface de lit fluidisé}}{\text{Surface de col de diffuseur}} = 6 \text{ à } 9$$

et un rapport de longueur de :

$$\text{L} = \frac{\text{Longueur de col de diffuseur}}{\text{Diamètre de col de diffuseur}} = 0,5 \text{ à } 1$$

2. Procédé selon la revendication 1, **caractérisé en ce que** le traitement thermique est effectué en tant que processus d'oxydation.

3. Procédé selon la revendication 1, **caractérisé en ce que** le traitement thermique est effectué en tant que processus de réduction.

4. Procédé selon la revendication 1, **caractérisé en ce que** le traitement thermique est effectué en tant que processus physique.

5. Procédé selon l'une quelconque des revendications 1 à 4, **caractérisé en ce qu'** on utilise comme substance à grains fins, un agent abrasif à base de corindum.

6. Procédé selon la revendication 5, **caractérisé en ce que** la substance à grains fins est un corindum mélangé à de l'oxyde de titane, de l'oxyde de zirconium, de l'oxyde de chrome ou du carbone.

7. Unité pour l'exécution du procédé selon l'une quelconque des revendications 1 à 6, sous forme d'un appareillage à deux étages, ayant un étage inférieur comme segment de lit fluidisé (20) en forme d'un espace de four conique fermé sur lui-même, un étage supérieur comme réfrigérant à double paroi (segment de four supérieur) (30), un col de diffuseur (25) disposé entre l'étage inférieur et l'étage supérieur, d'une manière centrale, ainsi que des moyens (40) pour l'introduction du grain fin dans le segment de lit fluidisé, immédiatement au-dessus d'une grille à buses, dans lequel,

- en fonctionnement la température de paroi interne dans le segment de lit fluidisé (20) et dans le segment de four supérieur (30) se situe à au moins 10°C à 200°C, de préférence à 100°C en dessous de la température de ramollissement ou d'agglomération du grain fin,
- le col de diffusion (25) possède un rapport d'ouverture de :

$$\text{Ö} = \frac{\text{Surface de lit fluidisé}}{\text{Surface de col de diffuseur}} = 6 \text{ à } 9$$

et un rapport de longueur de :

$$\text{L} = \frac{\text{Longueur de col de diffuseur}}{\text{Diamètre de col de diffuseur}} = 0,5 \text{ à } 1$$

et

- la partie inférieure du segment de four supérieur (30) est sous forme conique avec un angle de cône de 30 à 45°.

Fig. 1